# EUROPEAN PATENT APPLICATION

(11) **EP 2 107 296 A2**
(43) Date of publication of application: **07.10.2009**
(21) Application number: 09460014.5
(22) Date of filing: 03.04.2009
(51) Int. Cl.: F21S 8/00, F21W 131/103, F21Y 101/02

(54) **A system for illumination of a roadway and illumination device for a roadway**

(30) Priority: 05.04.2008 PL 38485708
(71) Applicant: Es-System S.A., 30-701 Kraków (PL)
(72) Inventor: Pilszczek, Boguslaw, 31-464 Kraków (PL); Eriksson, Christer, 54245 Mariestad (SE)
(74) Representative: Pankowski, Jacek

(57) **Abstract**

The object of this invention is to provide a system for illumination of a roadway, to be placed in the vicinity of a side edge of the roadway, comprising at least one set of LEDs, comprising at least one row of LEDs each having individual optics the optical axes of which are inclined downwards towards the roadway, where the optical axes of the optics of at least a part of the LEDs are oriented divergently. It is also the object of this invention to provide an illumination device for illumination of a roadway, comprising a plurality of LEDs placed in a housing (1) with a rectangular cutout (2) for a transparent diffuser (3). In the housing (1) there is vertically positioned a mounting base (4) on which in seats (5) with radiators (6), at the transparent diffuser (43) side, LEDs (7) are arranged in at least one row, said LEDs having each individual optics, where the seats (5) are inclined relative to the mounting base (4) in a manner so that the optical axes of the LEDs (7) are inclined downwards relative to a plane perpendicular to the mounting plate (4), and the optical axes of the optics of at least a part of LEDs are oriented divergently.

## Description

The subject invention provides a system for illumination of a roadway, and an illumination device for a roadway. More specifically, the invention provides a system for illumination of a roadway, to be placed in the vicinity of a side edge of the roadway, comprising at least one set of LEDs, and an illumination device for illumination of a roadway, to be placed in the vicinity of a side edge of the roadway, comprising a plurality of LEDs positioned in a housing with a transparent diffuser.

Illumination systems and devices that comprise LEDs, including LEDs positioned linearly, are known. The Polish patent application P 360 225 discloses a housing for a linear source of light, intended to be used in illumination lines to mark traffic routes, emergency routes, wall contours, stairs contours and other architectural elements. According to the solution, linearly positioned LEDs are used. The international application WO 2005/011329 discloses an illumination element to be placed in-pavement, in particular in-pavement of a runway, comprising linearly arranged high-efficiency LEDs of a wide scattering angle, in a housing with a flat top with a transparent window. The international application WO 2006/098799 presents a method for the manufacture of a device and an illumination device the structure of which has a very thin body, and thereby the device can be used as an outdoor and indoor illumination element in vehicles and buildings. As the source of light, linearly arranged LEDs can be used.

A linear illumination unit comprising a plurality of LEDs is known from the US Patent 6,450,664. The unit comprises a plurality of LEDs positioned in a row, having a viewing angle in excess of 60°, and it comprises a Fresnel lens for converging the light emitted by the LEDs, in order to obtain illumination of an elongated narrow space. The solution is specifically intended for illumination of production line belts, to provide proper operation conditions for a quality control system that uses cameras. The solution can be also used in scanners with a movable source of light.

The disclosed solutions are not intended nor they can be used for illumination of roadways with light directed laterally or from above onto the roadway. In particular, the disclosed solutions would not provide sufficient illumination of the road without dazzling the driver.

It is the object of the invention to provide an illumination system for a roadway, to be placed in the vicinity of a side edge of the roadway, comprising at least one set of LEDs, and to provide an illumination device for illumination of a roadway, to be placed in the vicinity of a side edge of the roadway, comprising a plurality of LEDs positioned in a housing with a transparent diffuser.

The illumination system for a roadway, intended to be placed in the vicinity of a side edge of the roadway, comprising at least one set of LEDs, according to the invention is characterized in that the set of LEDs comprises at least one row of LEDs each with individual optics the optical axes of which are inclined downwards towards the roadway surface, and the optical axes of the optics of at least a part of the LEDs are oriented divergently. Preferably, the set of LEDs comprises at least two rows of LEDs. In particular, at least one row of LEDs comprises LEDs with optics of a narrow light scattering angle, and at least one row comprises LEDs with optics of a narrow light scattering angle and LEDs with optics of a wide light scattering angle. The set particularly comprises two rows of LEDs, where the upper row comprises LEDs with optics of a narrow light scattering angle, while the bottom row comprises LEDs with optics of a narrow light scattering angle and LEDs with optics of a wide light scattering angle. Preferably, in the upper row of LEDs the inclination of the optical axes of the LEDs is similar and it does not differ by more than 5°, while in the bottom row of LEDs the inclination of the optical axes of the LEDs is variable and for a part of the LEDs it differs by at least 10°.

In particular, the LEDs are positioned substantially uniformly spaced apart in rows, in particular spaced by a distance of 60-150 mm, and the upper row is positioned at a height of 0.75-1.05 m above the plane of the roadway surface, while the bottom row is positioned at a height of 0.70-1 m above the plane of the roadway surface, where the rows are separated by a distance of 0.04-0.06 m from each other. The LEDs are in particular positioned substantially equally spaced apart in rows at a distance of 60-120 mm, and the upper row is positioned at a height of 0.75-0.95 m, in particular at a height of approximately 0.77 m above the plane of the roadway surface, while the bottom row is positioned at a height of 0.70-0.9 m, in particular at a height of approximately 0.72 m above the plane of the roadway surface, and these rows are spaced by a distance of 0.045-0.055 m from each other, in particular approximately 0.05 m. Preferably, the set of LEDs comprises ten LEDs in the upper row spaced apart by a distance of 62-80 mm and ten LEDs in the bottom row spaced apart by a distance of 62-80 mm, where the distances in the upper and bottom rows are substantially equal, where five LEDs in the bottom row have optics of a narrow light scattering angle and five LEDs have optics of a wide light scattering angle. In particular, the LEDs are positioned consecutively from a starting point of the coordinate 0, where the first LED in the row is placed, at distances measured in the direction of traffic expected on the roadway, in the following sequence:
in the upper row

| Position relative to the starting point [±0,2 mm] | Inclination angle ±2° | Deflection angle ±2° | Type of LED with optics |
|---|---|---|---|
| 0 mm | 81° | 20° | Narrow |
| 65 mm | 81° | 24° | Narrow |
| 130 mm | 81° | 28° | Narrow |
| 195 mm | 81° | 32° | Narrow |
| 260 mm | 81° | 36° | Narrow |
| 325 mm | 81° | 40° | Narrow |
| 390 mm | 81° | 44° | Narrow |
| 455 mm | 81° | 48° | Narrow |
| 520 mm | 81° | 52° | Narrow |
| 585 mm | 81° | 56° | Narrow |

in the bottom row

| Position relative to the starting point [±0,2 mm] | Inclination angle ±2° | Deflection angle ±2° | Type of LED with optics |
|---|---|---|---|
| 0 mm | 78° | 0° | Narrow |
| 65 mm | 78° | 4° | Narrow |
| 130 mm | 78° | 8° | Narrow |
| 195 mm | 78° | 12° | Narrow |
| 260 mm | 78° | 16° | Narrow |
| 325 mm | 61° | 0° | Wide |
| 390 mm | 61° | 0° | Wide |
| 455 mm | 61° | 48° | Wide |
| 520 mm | 61° | 48° | Wide |
| 585 mm | 61° | 48° | Wide |

where
the inclination angle is an angle between the optical axis of the LED optics and a semi-axis extending from the LED vertically downwards, and
the deflection angle is an angle between the optical axis of the LED optics and a semi-axis extending from the LED head perpendicularly to the straight line defined by the row of LEDs in a plane containing the optical axis of the LED, where the deflection angle has a positive value when the optical axis is deflected towards the direction of expected traffic on the roadway, the angle being 0° when the optical axis is oriented perpendicularly to the direction of traffic, and it has a negative value when the optical axis is deflected in a direction opposite to the direction of expected traffic on the roadway.

Preferably, the LEDs are LEDs of voltage 230 V±30 V, and the narrow type of LED optics is a type of optics that provides a light scattering angle of 2x5°±2°, while the wide type of LED optics is a type of optics that provides a light scattering angle of 2x22.5°±2°.

In particular, the system comprises at least two sets of LEDs, and at least one set is intended to be placed in the vicinity of a side edge of a roadway at the right side relative to the direction of traffic expected on the roadway, and at least one set is intended to be placed in the vicinity of the side edge of the roadway at the left side, while the arrangement, inclination and deflection of the LEDs in the set intended to be placed at the right side, and the arrangement, inclination and deflection of the LEDs in the set intended to be placed at the left side are such that the sets constitute mirror images of each other.

The illumination device for illumination of a roadway, intended to be positioned in the vicinity of a side edge of the roadway, comprising a plurality of LEDs positioned in a housing comprising a transparent diffuser, according to the invention is characterized in that in an elongated housing with a lateral substantially rectangular cutout for the transparent diffuser there is vertically fastened a mounting base, on which, in seats with radiators, at the side where the transparent diffuser is present, LEDs are positioned in at least one row, said LEDs each having individual optics, where the seats are inclined to the mounting base in a manner so as the optical axes of the LEDs are inclined downwards relative to a plane perpendicular to the mounting plate, and the optics axes of at least a part of the LEDs are oriented divergently. Preferably, on the mounting plate at least two rows of LEDs are fastened, and at least one row comprises LEDs with optics of a narrow light scattering angle, and at least one row comprises LEDs with optics of a narrow light scattering angle and LEDs with optics of a wide light scattering angle. In particular, on the mounting plate, two rows of LEDs are attached, where the upper row comprises LEDs with optics of a narrow light scattering angle, and the bottom row comprises LEDs with optics of a narrow light scattering angle and LEDs with optics of a wide light scattering angle. Preferably, the upper row of LEDs comprises ten LEDs spaced apart by a distance of 62-80 mm, and the bottom row of LEDs comprises ten LEDs spaced apart by a distance of 62-80 mm, where the distances in the upper and bottom rows are substantially equal, while five LEDs in the bottom row have optics of a narrow light scattering angle and five LEDs have optics of wide light scattering angle, and the distance between the upper and bottom rows is approximately 50 mm. The LEDs are in particular positioned consecutively from a starting point of the coordinate 0, where the first LED of the row is placed, and they spaced apart by distances measured in the direction of traffic expected on the roadway to be illuminated, in the following sequence:
in the upper row

| Position relative to the starting point [±0,2 mm] | Inclination angle ±2° | Deflection angle ±2° | Type of LED with optics |
|---|---|---|---|
| 0 mm | 81° | 20° | Narrow |
| 65 mm | 81° | 24° | Narrow |
| 130 mm | 81° | 28° | Narrow |
| 195 mm | 81° | 32° | Narrow |
| 260 mm | 81° | 36° | Narrow |
| 325 mm | 81° | 40° | Narrow |
| 390 mm | 81° | 44° | Narrow |
| 455 mm | 81° | 48° | Narrow |
| 520 mm | 81° | 52° | Narrow |
| 585 mm | 81° | 56° | Narrow |

in the bottom row

| Position relative to the starting point [±0,2 mm] | Inclination angle ±2° | Deflection angle ±2° | Type of LED with optics |
|---|---|---|---|
| 0 mm | 78° | 0° | Narrow |
| 65 mm | 78° | 4° | Narrow |
| 130 mm | 78° | 8° | Narrow |
| 195 mm | 78° | 12° | Narrow |
| 260 mm | 78° | 16° | Narrow |
| 325 mm | 61° | 0° | Wide |
| 390 mm | 61° | 0° | Wide |
| 455 mm | 61° | 48° | Wide |
| 520 mm | 61° | 48° | Wide |
| 585 mm | 61° | 48° | Wide |

where
the inclination angle is an angle between the optical axis of the LED optics and a semi-axis extending from the LED vertically downwards, and
the deflection angle is an angle between the optical axis of the LED optics and a semi-axis extending from the LED head perpendicularly to a straight line defined by the row of LEDs in a plane containing the optical axis of the LED, where the deflection angle has a positive value when the optical axis is deflected towards the direction of expected traffic on the roadway, the angle being 0° when the optical axis is oriented perpendicularly to the direction of traffic, and it has a negative value when the optical axis is deflected in a direction opposite to the direction of expected traffic on the roadway. Preferably, the LEDs are LEDs of voltage 230 V±30 V, and the narrow type of LED optics is a type of optics that provides a light scattering angle of 2x5°±2°, while the wide type of LED optics is a type of optics that provides a light scattering angle of 2x22.5°±2°.

In particular, the LEDs are provided with a masking frame, particularly with a masking frame made of metalized plastics.

Preferably, the housing has three compartments, where the central compartment is considerably longer than the outer compartments, it houses the mounting base along with the LEDs and individual power supply units for each LED row positioned between the mounting base and a back wall of the compartment and electrically connected by means of a branch-joint to the power supply conduit inserted into the central compartment through an opening in a side wall of the compartment, and a front wall of the central compartment has a substantially rectangular cutout for a transparent diffuser. Preferably, along the entire housing and through openings in outer side walls of the housing, as well as through openings in side walls of the central compartment, a mains cable extends, placed between the mounting base and the back wall of the compartment for powering a plurality of illumination devices. In particular, the periphery of the rectangular cutout is provided with elements for fastening the diffuser in the housing and the contact area of the diffuser with the periphery of the rectangular cutout is sealed with a filling silicon binder, and the openings for the power supply cable and the mains cable are provided with stuffing-boxes to assure tightness. The outermost compartments of the housing preferably have front parts lifted upwards, provided preferably with elements for locking thereof in a non-lifted position, and inside the outermost compartments a branch-joint is positioned for connection of the power supply cable of power supply units to the mains cable, as well as means for stable fastening of the housing to the support.

Preferably, the device is intended to be placed in the vicinity of a side edge of a roadway at the right side relative to the direction of traffic expected on the roadway, so as to position the bottom row of LEDs at a height of 0.70-1 m above the plane of the roadway surface, in particular at a height of approximately 0.72 m above the plane of the roadway surface, to illuminate the roadway.

Preferably, the device is intended to be placed in the vicinity of a side edge of a roadway at the left side relative to the direction of traffic expected on the roadway so as to position the bottom row of LEDs at a height of 0.70-1 m above the plane of the roadway surface, in particular at a height of approximately 0.72 m above the plane of the roadway surface, to illuminate the roadway.

The solution of the invention provides an illumination system and a specialist illumination device for illumination of roads. Positioning of the light points, suitably oriented and inclined relative to the horizontal plane and deflected from the vertical plane is selected in a manner so as to provide uniform illumination of a traffic lane of the roadway for a specific direction of traffic without dazzling the driver. The use of LEDs makes it possible to obtain sufficient road illumination at low consumption of electric energy. The illumination device of the invention comprises components of exceptionally long service life and this causes that maintenance of the optics is not necessary. Moreover, all the optics components are housed in the tight and non-openable central compartment of the housing, and this protects the optics against contamination. The construction and material of the mounting plate, radiators and positioning of the components are such that sufficient heat removal is assured, without the necessity to use forced cooling. The housing is made of a corrosion resistant metallic material, and it is coated by a coating material of a non-bright color, preferably matted, so as to avoid light reflection. Possible maintenance operations include cleaning of the outer surface of the diffuser.

The object of the invention in one embodiment is explained more specifically with reference to the drawing where Fig. 1 shows a perspective view of the LEDs positioned on the mounting plate; Fig. 2 shows the LEDs positioned on the mounting plate and viewed from the front of the optics; Fig. 3 shows a perspective view of the illumination device of the invention; Fig. 4a shows a front view of the illumination device of the invention; Figs. 4b and 4c show a cross-section view of the device of Fig. 4a; Fig. 5 shows a cross-section view of the device in another embodiment of fastening of the mounting plate; Fig. 6a shows a front view of the illumination device of the invention; and Fig. 6b shows a longitudinal section view of the device of Fig. 6b.

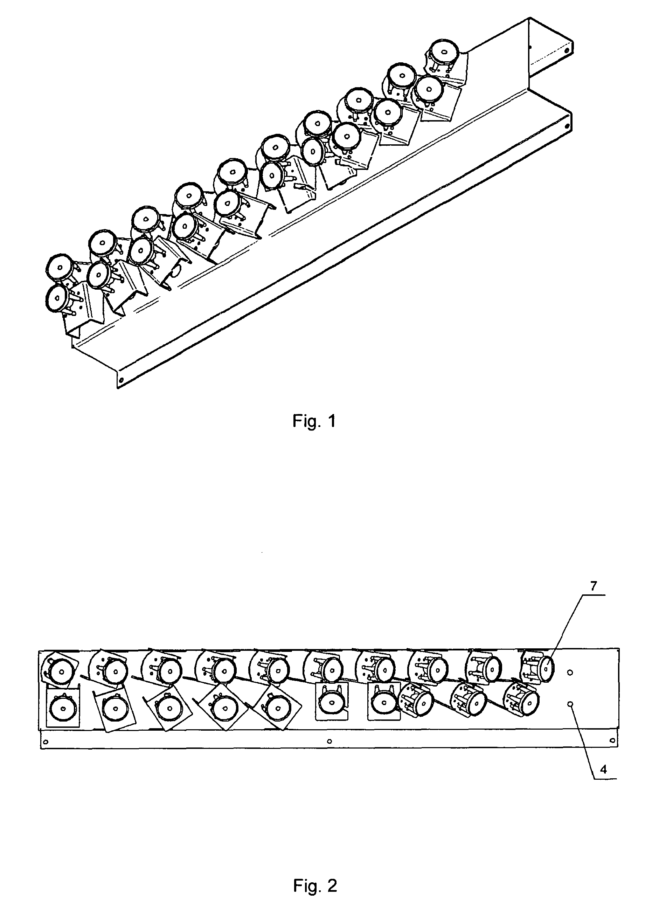

The system for illumination of a roadway according to the invention uses at least one set of LEDs each having individual optics of optical axes inclined downwards towards the roadway surface and oriented in a manner so as the optical axes of at least a part of the LEDs form a diverging beam. Preferably, a LED set comprises at least two rows of LEDs. Fig. 1 shows an exemplary set of LEDs positioned in two parallel rows and uniformly spaced apart in the upper and bottom row, intended to be placed at the left side of the roadway on a one-way road. A corresponding set to be placed at the right side of the road constitutes a mirror image of the set of Fig. 1. Fig. 2 shows that the LEDs are oriented at different angles, where all they are inclined towards the roadway surface, and moreover at least a part of the LEDs is deflected in the direction of traffic expected on the roadway. For the purpose of defining the subject invention, the inclination angle and the deflection angle are defined as follows:
- inclination angle is an angle between the optical axis of the LED optics and a semi-axis extending from the LED vertically downwards;
- deflection angle is an angle between the optical axis of the LED optics and a semi-axis extending from the LED head perpendicularly to a straight line defined by a row of LEDs in the plane containing the optical axis of the LED, where the deflection angle has a positive value when the optical axis is deflected towards the direction of the expected traffic on the roadway, the angle being 0° when the optical axis is oriented perpendicularly to the direction of traffic, and it has a negative value when the optical axis is deflected in a direction opposite to the direction of expected traffic on the roadway.

At least one of the rows may comprise LEDs with optics of a narrow light scattering angle, and at least one of the rows may comprise LEDs with optics of a wide light scattering angle. For the purpose of defining the subject invention, a LED with optics of a narrow light scattering angle is a LED with optics of a light scattering angle of at most 2x15°, preferably 2x5°±5°, more preferably 2x5°±2°, and a LED with optics of a wide light scattering angle is a LED with optics of a light scattering angle of at least 2x15°, preferably 2x15° to 2x30°, more preferably 2x22.5°±2°.

Preferably, the inclination angle of the LED with optics of a narrow light scattering angle is different than the inclination angle of the LED with optics of a wide light scattering angle. Preferably, the deflection angles for the LEDs with optics of a narrow light scattering angle are positive, while in the case of the LEDs with optics of a wide scattering angle for a part of the LEDs the deflection angle is positive and for a part it is 0° which means, when considering the positioning tolerance of ±2°, that it can assume negative values.

Mostly, the LEDs are positioned substantially equally spaced apart in rows. The distance depends on the LED power and preferably is 60-120 mm. In the case of a LED of a power of approximately 1W the distance is preferably 62-80 mm.

The set of LEDs is placed in the vicinity of a side edge of a roadway, preferably above the plane of the roadway surface, more preferably at a height of at least 0.5 m, the most preferably at least 0.7 m. In a set comprising two rows of LEDs, preferably the upper row is placed 0.75-1.05 m above the plane of the roadway surface, and the bottom row is placed at a height of 0.7-1 m above the plane of the roadway surface, where the rows are at a distance of 0.04-0.06 m from each other. More preferably, the upper row is placed at a height of 0.75-0.95 m, approximately 0.77 m, above the plane of the roadway surface, and the bottom row is placed at a height of 0.70-0.9 m, preferably 0.72 m, above the plane of the roadway surface, where the rows are at a distance of 0.045-0.055 from each other.

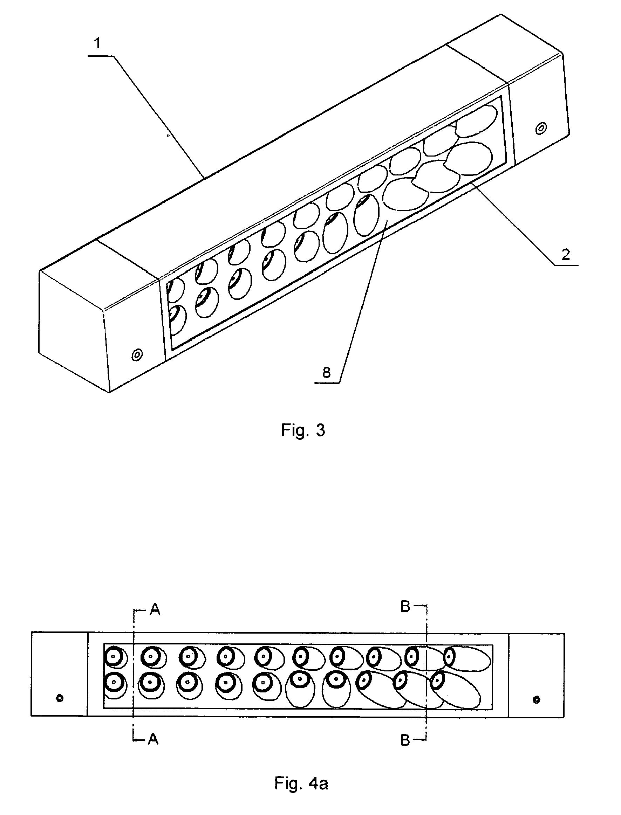

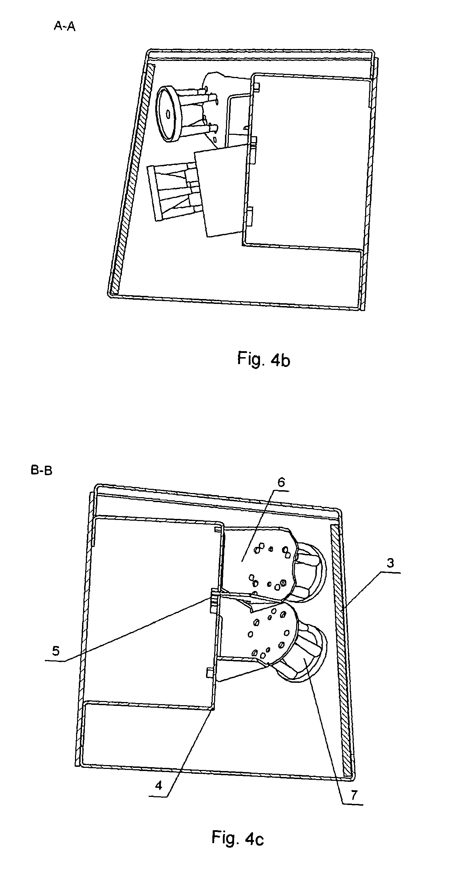

Fig. 3 shows an illumination device for illumination of a roadway, according to the invention. The device comprises an elongated housing 1 that has lateral rectangular cutout 2 in which a transparent diffuser 3 (shown in a cross-section in Fig. 4c) is placed. The device comprises twenty LEDs 7 each with individual optics. At the front of the optics, the device is provided with a masking frame 8 that surrounds the set of LEDs. The optics of each LED 7 provides a specific light scattering angle. The LEDs are linearly placed substantially uniformly spaced apart in two rows, in a preferable embodiment spaced apart by 65±0.2 mm. The LEDs are LEDs of voltage 230 V±30 V, for example of a power approximately of 1 W, such as LEDs of a color temperature of about 5500 K. The illumination device comprises in the upper row ten LEDs with optics of a narrow light scattering angle (such as 2x5°, e.g. Lambertian LXHL-MW1D FHS-HNB1-LL01). The device comprises in the bottom row ten LEDs, and the first five LEDs (as counted along the direction of traffic on the roadway to be illuminated by the device) are LEDs with optics of a narrow light scattering angle (such as 2x5°, e.g. Lambertian LXHL-MW1D FHS-HNB1-LL01), while the five following LEDs are LEDs of a wide light scattering angle (such as 2x22,5°, e.g. Lambertian LXHL-MW1D FHS-HWB1-LL01). Characteristics of arrangement and orientation of the LEDs in the upper and bottom row is as follows:
- LED positions in the upper row

| Position relative to the starting point [±0,2 mm] | Inclination angle ±2° | Deflection angle ±2° | Type of LED with optics |
|---|---|---|---|
| 0 mm | 81° | 20° | Narrow |
| 65 mm | 81° | 24° | Narrow |
| 130 mm | 81° | 28° | Narrow |
| 195 mm | 81° | 32° | Narrow |
| 260 mm | 81° | 36° | Narrow |
| 325 mm | 81° | 40° | Narrow |
| 390 mm | 81° | 44° | Narrow |
| 455 mm | 81° | 48° | Narrow |
| 520 mm | 81° | 52° | Narrow |
| 585 mm | 81° | 56° | Narrow |

- LED positions in the bottom row

| Position relative to the starting point [±0,2 mm] | Inclination angle ±2° | Deflection angle ±2° | Type of LED with optics |
|---|---|---|---|
| 0 mm | 78° | 0° | Narrow |
| 65 mm | 78° | 4° | Narrow |
| 130 mm | 78° | 8° | Narrow |
| 195 mm | 78° | 12° | Narrow |
| 260 mm | 78° | 16° | Narrow |
| 325 mm | 61° | 0° | Wide |
| 390 mm | 61° | 0° | Wide |
| 455 mm | 61° | 48° | Wide |
| 520 mm | 61° | 48° | Wide |
| 585 mm | 61° | 48° | Wide |

where the inclination angle and the deflection angle, as well as the light scattering angle, are defined as provided above.

Figs. 4b and 4c show the device in a cross-section view according to the section planes indicated in Fig. 4a. The LEDs 7 are fastened on the mounting plate 4 made of a metallic alloy of a good thermal conductivity, for example an aluminum alloy. Seats 5 for LEDs 7 are formed by any suitable metal treatment technique, for example by cutting the sheet of the plate along an open broken line and bending away the cut portions that constitute support for the LEDs. Each bent portion is inclined (relative to the plane of the mounting plate 4) at an angle specific for a LED 7 to be arranged in this seat 5. The plate 4 along with seats 5 can be also made with the use of a metal casting technique followed by optional additional mechanical shaping of seats 5 to provide proper precise positioning for LEDs 7. The seats 5 are provided with radiators 6 made of a metal of good thermal conductivity on which the LEDs 7 are positioned. The LEDs 7 are provided with a masking frame 8 that surrounds the individual LEDs, in one embodiment made of plastics. In a preferable embodiment the surface of the plastics is vacuum metalized with aluminum and simultaneously or subsequently the metalized surface is protected with the use of HMDS (hexamethyldisilazane).

The mounting plate 5 is arranged in a housing 1 made of a material of high mechanical strength and corrosion resistance, such as non-corrosive metallic alloy, e.g. stainless steel or aluminum alloy, preferably coated with a non-bright lacquer (such as black lacquer) and it is fastened to the housing 1 for example with the use of screw fasteners. Each row of LEDs 7 is provided with a separate electric cable (not shown) for powering the LEDs (in parallel connection) extending from a power supply unit (not shown), separately for each row. Each power supply unit is electrically powered through an electric connection (not shown) by a mains cable (with the use of a branch-joint). The mains cable extends through an opening in a side wall of the housing 1, then inside the housing 1 and out of the housing through an opening 10 in the opposite wall of the housing. The emerging mains cable is used for powering a further/next illumination device. The openings 10 in the walls used for the passage of cable are provided with stuffing-boxes with sealing rings and optionally they are additionally sealed with a filling silicon binder.

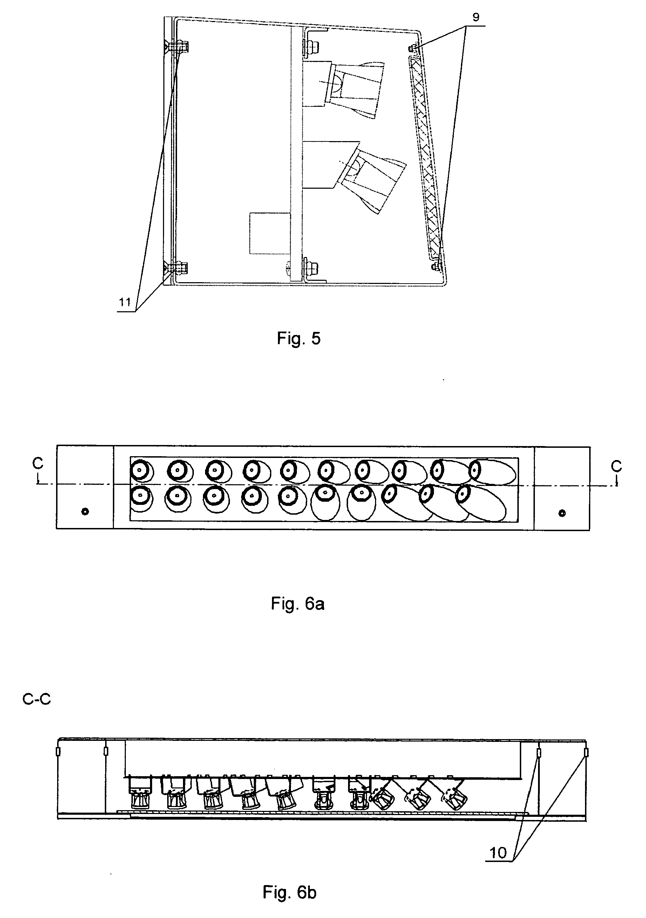

Fig. 6b illustrates a cross-section in a plane indicated in Fig. 6a and shows that the housing 1 of the illumination device has three compartments, where the central compartment is considerably longer than the outer compartments, and it houses the mounting base 4 along with LEDs 7 and power supply units with electric connectors (not shown). At the front, the compartment has a substantially rectangular cutout 2 for a transparent diffuser 3 preferably made of toughened glass. The periphery of the rectangular cutout 2 is provided with elements 9 for fastening the diffuser 3 in the housing 1. The contact area of the diffuser 3 with the periphery of the rectangular cutout 2 is sealed with a filling silicon binder.

The outermost compartments of the housing 1 have front portions lifted upwards and locked in a non-opened position, for example by means of a bolt or another locking system for a non-opened position. In one embodiment a lock opened with a key is used. Inside the outermost compartment a branch-joint is placed (not shown) for connection with the mains cable (not shown) and means 11 for stable fastening the housing 1 to the support. The lifted front portions have each a function of an inspection window to provide access to the electrical connection and to make it possible to fasten the illumination device at a desired location.

The central compartment is a tightly closed compartment and it is inaccessible. The used components of an exceptionally long service life cause that servicing of the optics is not required and maintenance of the device includes solely cleaning of the outer side of the diffuser.

The device can be used and placed in the vicinity of a side edge of a roadway at the right side relative to the direction of traffic expected on the roadway, as well as at the left side of the roadway (e.g. at separated one-way roadways). The structure of the device, arrangement and orientation of the LEDs 7 in both varieties of the illumination device are the same, but the respective varieties of the device (for the right side and for the left side) constitute mirror images of each other and they cannot be used alternatively.

The way in which a plurality of illumination devices according to the invention can be arranged in the vicinity of side edges of a roadway depends on several factors such as the width of the route with the roadway to be illuminated or the kind of the road pavement. Therefore it is desirable to calculate the profile of arrangement individually for a specific road for which the illumination system is developed.

In the case of a two-way road, each way having a width of 3.5 m and with two shoulder lanes each having a width of 0.5 m (total road width 8 m), the devices of the invention are placed at both sides of the roadway. Optimum illumination of the road is obtained when the illumination devices are spaced apart by 2 m along the road at the right and left sides.

## Claims

1. An illumination system for a roadway, to be placed in the vicinity of a side edge of the roadway, comprising at least one set of LEDs, **characterized in that** the set of LEDs comprises at least one row of LEDs each with individual optics the axes of which are inclined downwards towards the roadway surface, and the optical axes of at least a part of the LEDs are oriented divergently.

2. A system according to claim 1, **characterized in that** the set of LEDs comprises at least two rows of LEDs.

3. A system according to claim 2, **characterized in that** at least one row of LEDs comprises LEDs with optics of a narrow light scattering angle, and at least one row comprises LEDs with optics of a narrow light scattering angle and LEDs with optics of a wide scattering angle.

4. A system according to claims 2 or 3, **characterized in that** the set comprises two rows of LEDs, where the upper row comprises LEDs with optics of a narrow light scattering angle, and the bottom row comprises LEDs with optics of a narrow light scattering angle and LEDs with optics of a wide light scattering angle.

5. A system according to claim 4, **characterized in that** in the upper row of LEDs the inclination of the LED optical axes is similar and it does not differ by more than 5°, while in the bottom row of LEDs the inclination of the LED optical axes is variable and for a part of the LEDs it differs by at least 10°.

6. A system according to claim 4, **characterized in that** the LEDs are positioned substantially uniformly spaced apart in rows, in particular spaced by a distance of 60-150 mm, where the upper row is positioned at a height of 0.75-1.05 m above the plane of the roadway surface, and the bottom row is positioned at a height of 0.70-1 m above the plane of the roadway surface, and the rows are separated by a distance of 0.04-0.06 m from each other.

7. A system according to claim 6, **characterized in that** the LEDs are positioned substantially equally spaced apart in rows at a distance 60-120 mm, where the upper row is positioned at a height of 0.75-0.95 m, in particular at a height of approximately 0.77 m above the plane of the roadway surface, and the bottom row is positioned at a height of 0.70-0.9 m, in particular at a height of approximately 0.72 m above the plane of the roadway surface, and the rows are spaced by a distance of 0.045-0.055 m from each other, in particular approximately 0.05 m.

8. A system of claim 7, **characterized in that** the set of LEDs comprises ten LEDs in the upper row spaced apart by a distance of 62-80 mm and ten LEDs in the bottom row spaced apart by a distance of 62-80 mm, where the distances in the upper row and in the bottom row are substantially equal, where five LEDs in the bottom row have optics of a narrow light scattering angle and five LEDs have optics of a wide light scattering angle.

9. A system of claim 8, **characterized in that** the LEDs are positioned consecutively from a starting point of the coordinate 0 mm, where the first LED of the row is placed, at distances measured in the direction of traffic expected on the roadway in the following sequence:
in the upper row
| Position relative to the starting point [±0,2 mm] | Inclination angle ±2° | Deflection angle ±2° | Type of LED with optics |
|---|---|---|---|
| 0 mm | 81° | 20° | Narrow |
| 65 mm | 81° | 24° | Narrow |
| 130 mm | 81° | 28° | Narrow |
| 195 mm | 81° | 32° | Narrow |
| 260 mm | 81° | 36° | Narrow |
| 325 mm | 81° | 40° | Narrow |
| 390 mm | 81° | 44° | Narrow |
| 455 mm | 81° | 48° | Narrow |
| 520 mm | 81° | 52° | Narrow |
| 585 mm | 81° | 56° | Narrow |
in the bottom row
| Position relative to the starting point [±0,2 mm] | Inclination angle ±2° | Deflection angle ±2° | Type of LED with optics |
|---|---|---|---|
| 0 mm | 78° | 0° | Narrow |
| 65 mm | 78° | 4° | Narrow |
| 130 mm | 78° | 8° | Narrow |
| 195 mm | 78° | 12° | Narrow |
| 260 mm | 78° | 16° | Narrow |
| 325 mm | 61° | 0° | Wide |
| 390 mm | 61° | 0° | Wide |
| 455 mm | 61° | 48° | Wide |
| 520 mm | 61° | 48° | Wide |
| 585 mm | 61° | 48° | Wide |
where
the inclination angle is an angle between the optical axis of the LED optics and a semi-axis extending from the LED vertically downwards, and
the deflection angle is an angle between the optical axis of the LED optics and a semi-axis extending from the LED head perpendicularly to a straight line defined by the row of LEDs in a plane containing the optical axis of the LED, where the deflection angle has a positive value when the optical axis is deflected towards the direction of expected traffic on the roadway, the angle being 0° when the optical axis is oriented perpendicularly to the direction of traffic, and it has a negative value when the optical axis is deflected in a direction opposite to the direction of expected traffic on the roadway.

10. A system according to claim 9, **characterized in that** the LEDs are LEDs of voltage 230 V±30 V, where the narrow type of LED optics is a type of optics that provides a light scattering angle of 2x5°±2°, and a wide type of LED optics is a type of optics that provides a light scattering angle of 2x22.5°±2°.

11. A system according to claims 1-10, **characterized in that** it comprises at least two sets of LEDs, where at least one set is to be placed in the vicinity of a side edge of the roadway at the right side relative to the direction of traffic expected on the roadway, and at least one set is to be placed in the vicinity of a side edge of the roadway at the left side, where the arrangement, inclination and deflection of the LEDs in the set to be placed at the right side and the arrangement, inclination and deflection of the LEDs in the set to be placed at the left side are such that the sets constitute mirror images of each other.

12. An illumination device for illumination of a roadway, to be placed in the vicinity of a side edge of the roadway, comprising a plurality of LEDs positioned in a housing comprising a transparent diffuser, **characterized in that** in the elongated housing (1) that has a lateral substantially rectangular cutout (2) for a transparent diffuser (3), a mounting base (4) is vertically fastened, on which in seats (5) with radiators (6), at the side of the transparent diffuser (3), LEDs (7) are positioned in at least one row, each LED having individual optics, where the seats (5) are inclined relative to the mounting base (4) in a manner so as the optical axes of the LEDs (7) are inclined downwards relative to a plane perpendicular to the mounting plate (4), and the optical axes of the optics of at least a part of the LEDs are oriented divergently.

13. A device according to claim 12, **characterized in that** on the mounting plate (4) at least two rows of LEDs (7) are fastened, where at least one row comprises LEDs with optics of a narrow light scattering angle, and at least one row comprises LEDs with optics of a narrow light scattering angle and LEDs with optics of a wide light scattering angle.

14. A device according to claim 13, **characterized in that** on the mounting plate (4) two rows of LEDs (7) are attached, where the upper row comprises LEDs with optics of a narrow light scattering angle, and the bottom row comprises LEDs with optics of a narrow light scattering angle and LEDs with optics of a wide light scattering angle.

15. A device according to claim 14, **characterized in that** the upper row of LEDs (7) comprises ten LEDs spaced apart by a distance of 62-80 mm, and the bottom row of LEDs (7) comprises ten LEDs spaced apart by a distance of 62-80 mm, where the distances in the upper row and in the bottom row are substantially equal, where five LEDs in the bottom row have optics of a narrow light scattering angle, and five LEDs have optics of a wide light scattering angle, and the distance between the upper row and the bottom row is approximately 50 mm.

16. A device according to claim 15, **characterized in that** the LEDs (7) are positioned consecutively from a starting point of the coordinate 0 mm, where the first LED of the row is placed, and they are spaced apart by distances measured in the direction of traffic expected on the roadway to be illuminated, in the following sequence:
in the upper row
| Position relative to the starting point [±0,2 mm] | Inclination angle ±2° | Deflection angle ±2° | Type of LED with optics |
|---|---|---|---|
| 0 mm | 81° | 20° | Narrow |
| 65 mm | 81° | 24° | Narrow |
| 130 mm | 81° | 28° | Narrow |
| 195 mm | 81° | 32° | Narrow |
| 260 mm | 81° | 36° | Narrow |
| 325 mm | 81° | 40° | Narrow |
| 390 mm | 81° | 44° | Narrow |
| 455 mm | 81° | 48° | Narrow |
| 520 mm | 81° | 52° | Narrow |
| 585 mm | 81° | 56° | Narrow |
in the bottom row
| Position relative to the starting point [±0,2 mm] | Inclination angle ±2° | Deflection angle ±2° | Type of LED with optics |
|---|---|---|---|
| 0 mm | 78° | 0° | Narrow |
| 65 mm | 78° | 4° | Narrow |
| 130 mm | 78° | 8° | Narrow |
| 195 mm | 78° | 12° | Narrow |
| 260 mm | 78° | 16° | Narrow |
| 325 mm | 61° | 0° | Wide |
| 390 mm | 61° | 0° | Wide |
| 455 mm | 61° | 48° | Wide |
| 520 mm | 61° | 48° | Wide |
| 585 mm | 61° | 48° | Wide |
where
the inclination angle is an angle between the optical axis of the LED optics and a semi-axis extending from the LED vertically downwards, and
the deflection angle is an angle between the optical axis of the LED optics and a semi-axis extending from the LED head perpendicularly to a straight line defined by the row of LEDs in a plane containing the optical axis of the LED, where the deflection angle has a positive value when the optical axis is deflected towards the expected traffic on the roadway, the angle being 0° when the optical axis is oriented perpendicularly to the direction of traffic, and it has a negative value when the optical axis is deflected in a direction opposite to the direction of expected traffic on the roadway.

17. A device according to claim 16, **characterized in that** the LEDs are LEDs of voltage 230 V±30 V, where the narrow type of LED optics is a type of optics that provides a light scattering angle of 2x5°±2°, and the type of LED optics is a type of optics that provides a light scattering angle of 2x22.5°±2°.

18. A device according to claims 12 or 17, **characterized in that** the LEDs (7) are provided with a masking frame (8), particularly made of metalized plastics.

19. A device according to claims 12 or 17, **characterized in that** the housing (1) has three compartments, where the central compartment is considerably longer than the outer compartments, and it houses the mounting base (4) along with LEDs (7) and individual power supply units for each row of LEDs (7), positioned between the mounting base (4) and a back wall of the compartment and electrically connected by means of a branch-joint to a power supply conduit inserted into the central compartment through an opening (10) in a side wall of the compartment, where the front wall of the central compartment has a substantially rectangular cutout (2) for insertion of a transparent diffuser (3).

20. A device according to claims 12 or 19, **characterized in that** along the entire housing (1) and through the openings in the outer side walls of the housing, and through the openings (10) in the side walls of the central compartment, a mains cable extends, placed between the mounting base (4) and the back wall of the compartment, for powering a plurality of illumination devices.

21. A device according to claims 12 or 19 or 20, **characterized in that** the periphery of the rectangular cutout (2) is provided with elements (9) for fastening the diffuser (3) in the housing (1), where the contact area of the diffuser (3) with the periphery of the rectangular cutout (2) is sealed with a filling silicon binder, and the openings (10) for the power supply cable and the mains cable are provided with stuffing-boxes to assure tightness.

22. A device according to claims 12 or 19, **characterized in that** the outermost compartments of the housing (1) have front portions lifted upwards, provided particularly with elements for locking thereof in a non-lifted position, and inside the outermost compartments a branch-joint is positioned for connection of the power supply units to the mains cable of the power supply units to the mains cable, as well as means (11) for stable fastening of the housing (1) to the support.

23. A device according to claims 12-22, **characterized in that** it is to be placed in the vicinity of a side edge of the roadway at the right side relative to the direction of traffic expected on the roadway, so as to position the bottom row of LEDs (7) at a height of 0.70-1 m above the plane of the roadway surface, in particular at a height of approximately 0.72 m above the plane of the roadway surface, to illuminate the roadway surface.

24. A device according to claims 12-22, **characterized in that** it is to be placed in the vicinity of a side edge of the roadway at the left side relative to the direction of traffic expected on the roadway, so as to position the bottom row of LEDs (7) at a height of 0.70-1 m above the plane of the roadway surface, in particular at a height of approximately 0.72 m above the plane of the roadway surface, to illuminate the roadway surface.
